Europäisches Patentamt

European Patent Office

Office européen des brevets

(11) Publication number: **0 239 000 B1**

# EUROPEAN PATENT SPECIFICATION

(45) Date of publication of patent specification: **03.04.91**    (51) Int. Cl.⁵: **F16L 33/26**

(21) Application number: **87103986.3**

(22) Date of filing: **18.03.87**

(54) Termination of a tube for transporting pressurized fluids and method for realizing said termination.

(30) Priority: **28.03.86 IT 1994086**

(43) Date of publication of application:
**30.09.87 Bulletin 87/40**

(45) Publication of the grant of the patent:
**03.04.91 Bulletin 91/14**

(84) Designated Contracting States:
**ES FR GB**

(56) References cited:
**CA-A- 1 208 677**
**DE-C- 3 229 691**
**US-A- 817 060**
**US-A- 4 225 162**

(73) Proprietor: **SOCIETA CAVI PIRELLI S.p.A.**
**Piazzale Cadorna, 5**
**I-20123 Milan(IT)**

(72) Inventor: **Dotti, Enrico**
**Via Archimede 22**
**I-Milan(IT)**
Inventor: **Sala, Angelo**
**Via Leopardi 3**
**I-Merate (Como)(IT)**

(74) Representative: **Giannesi, Pier Giovanni et al**
**Pirelli S.p.A. Direzione Brevetti Piazzale**
**Cadorna, 5**
**I-20123 Milano(IT)**

Rank Xerox (UK) Business Services

## Description

The present invention concerns the termination of a tube for transporting high pressure fluids of the large diameter type as well as the method for realizing said termination.

Solely by way of example, the tubes taken into consideration have outer diameter of at least two inches (about 5 cm) and the internal pressure can be comprised between 50 and 1000 atm.

These flexible tubes are used for transporting liquids (such as water, crude oil, etc.), or gases (chiefly hydrocarbons), and they generally comprise a tubular body made of a plastic (or more generically, a polymeric) material with appropriate dimensions and two or more crowns of extended metallic bodies wound helically around the tubular plastic body with having at least two opposite flat (or substantially flat) surfaces, for enabling the contact, between said surfaces and the adjacent layers of the tube, to take place on one extended surface. For simplicity sake from henceforth, the extended metallic bodies will be referred to by the term metal-straps.

One of the functions, carried out by the metal-straps, is the reinforcing, in the radial sense, and holding the inner tubular body, made of plastic, that is subjected to the high pressure of the fluid which is transported.

Another function of the metal-straps is to act as a traction resistant element for the tube, and to render the tube apt for supporting longitudinal stresses during, for example, the laying operation.

The metal-straps layers are usually two in number, one wound over the other, with a relatively long-pitch helix, and in the opposite sense. But generally, the tube could have a greater number of metal-strap layers. For example there can be foreseen an inner layers formed by two adjacent metal-straps, wound with a short-pitch helix, whereby the function of radial reinforcement is predominant, and two outer layers, wound with a long-pitch, whereby the function of traction-resistance is predominant.

In the tube there can also be present other elements, such as a taping between the inner metal-strap layer and the tubular plastic body, for thus enabling a distribution of forces and avoiding any 'extrusion' phenomena of plastic material into the inter-spaces in-between two adjacent metal-straps, plastic layer coverings, outer layers made of jute, etc., which, in being non-relevant for the purpose of the present invention will therefore, not be taken into account here.

For connecting a tube-length to an apparatus, or else, to another tube-length, the tube extremities as shown in US patent 817060 are terminated with suitable flanges which are connected to one another, or to corresponding flanges on the apparatus.

The said flanges must not only guarantee the sealing, but also a stable engagement with the metal-straps, with requiring the layers of metal-straps to be spaced apart near the terminal length of the tube, and then to be fastened to the cylindrical parts of the flange.

In one known termination the metal-straps are folded backwards and then welded around an annular metallic body placed in a cavity (also annular) of the flange, which is thereupon filled-up with a resinous material that, upon hardening, further fastens said metal-straps to the flange.

In another known termination, the metal-straps are spaced apart, but instead of being folded-back, they are shaped in such a way as to present a certain number of directional changes in the annular resin-filled cavity, for ,in this way increasing the grip of the latter on the metal-straps.

The main drawbacks of these known terminations are the consequence of their requiring operations done to the metal-straps for modifying their shape, and also of the very long period of time that they require for their manufacturing, mostly due to the need for allowing the resin to completely harden. Moreover, although these terminations are generally found to be quite satisfactory as far as regards their tightness, they require flanges that have quite a complex construction.

Therefore, the aim of the present invention is to realize a termination with a high mechanical resistance and which is, at the same time, rapid and simple to construct.

The invention consists of a termination on a tube apt for transporting pressurized fluids and comprising a central tubular body of an elastomeric, or plastomeric material, and at least two layers of metal-straps that are wound helically around said central tubular body, said termination, comprising a flange having a cylindrical portion, and an annular body, characterized by the fact that the terminal tract of the said metal-straps without said central tubular body is clamped in-between the cylindrical portion and the annular body of the flange, with the interposition of layers of powders, in between the contacting surfaces of said metal-straps and of said flange parts, the powders being harder than said metal-straps and said flange parts.

Moreover, the invention consists of a method of fastening a flange, comprising a cylindrical portion and an annular body, to the extremity of a tube, comprising a central tubular body made of an elastomeric, or a plastomeric material, and at least two layers of metal-straps wound helically around the central tubular body, said method being characterized by the step of radially spacing apart these metal-straps from the central tubular body, for a tract in correspondence to the respective flange parts, and of engaging the spaced-apart tract of metal-straps, by clamping it between the cylindrical portion and the annular body of the flange, with the interposition of layers of powders, in-between the contacting surfaces of the metal-straps and of the flange parts, the powders being harder than said metal-straps and said flange parts.

The invention will now be described in reference to some preferred, but non-limiting, forms of embodiment, that are illustrated in the attached drawings, whereby:

FIG. 1 shows a longitudinal section of a termination, according to the invention;

FIG. 2 shows an alternative embodiment of the termination, according to the invention, that utilizes a different flange; and

FIG. 3 shows a further embodiment of a termination, according to the invention.

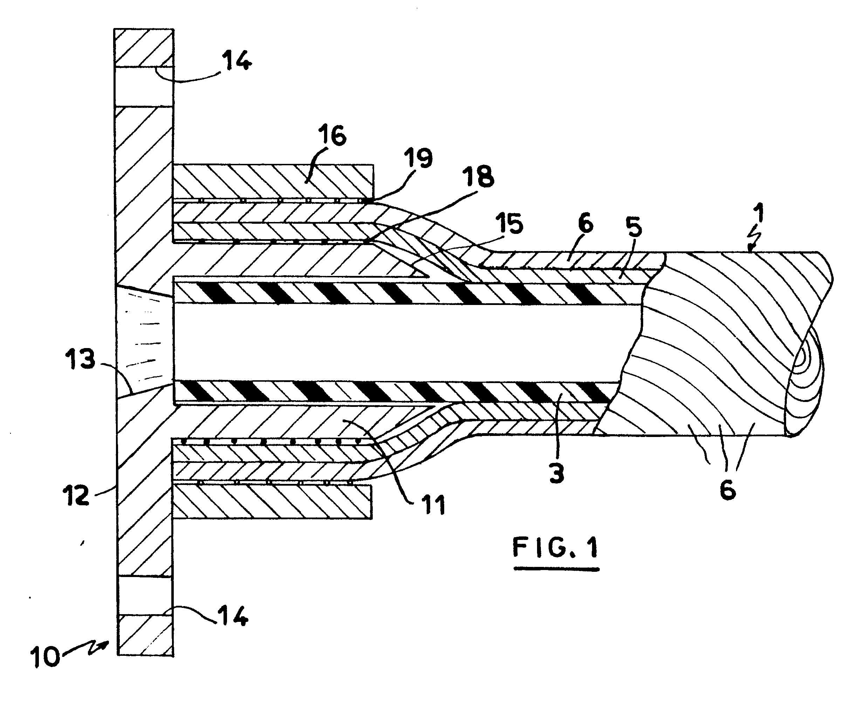

FIG. 1 shows a longitudinal cross-section of a termination in a tube 1 used for transporting high pressure fluids.

The tube 1 comprises a central tubular plastic body 3 (of nylon, for example), which guarantees the non-leakage of the fluid transported inside it, and two layers of metal-straps 5 and 6 made of a highly resistant steel wound according to conterposed helixes, which constitutes the elements for the traction-resistance and the radial reinforcement of the central tube 3.

More generally, the central tubular body 3 is formed by an elastomeric, or plastomeric material, depending upon the requirements of use. The two layers of metal-straps are realized out of a highly resistant steel e.g. of the type having an ultimate tensile stress, under traction, in the order of 120-140 Kg/mm$^2$ (these values however, are just indicative).

The tube is terminated with a flange 10 formed by circular frontal slab 12 provided with a central hole 13, and by a cylindrical portion 11, that is perpendicular to the slab and which is terminated by a tapering 15. The cylindrical portion has an inner diameter which is substantially equal to the outer diameter of the central tube 3.

The shown slab 12, is provided with a plurality of peripherical holes 14, for the clamping screws, however it could also have a different structure. Moreover, the said flange comprises an annular body or ring 16, whose inner diameter is greater than the outer diameter of the tube.

In the flange shown in Fig. 1, the cylindrical portion 11 is made solid with the slab 10 and the metal-straps (5 and 6) are clamped in-between the cylindrical portion 11 and the annular body 16 thanks to the presence of two layers of high hardness powders 18 and 19 respectively, interposed between the outer surface of the cylindrical portion 11 and the layer 5 of the metal-straps (inner surface), and in-between the inner surface of the annular body 16 and the layer 6 of the metal-straps (outer surface).

An analogous layer of powders, can eventually be foreseen even between the contacting surfaces between the two crowns of metal-straps 5 and 6.

The powders have a higher hardness, with respect to the materials forming the metal-straps and the flange, and in particular, when measuring the hardness in Vickers degrees (HV) the powders should have a hardness of at least 100 points higher than that of the material forming the metal-straps, the cylindrical portion and the annular body. Said metal-straps, solely by way of example, can be made of steel having a hardness in the order of 120-440 HV.

The dimensions of the powders, measured according to the Standard UNI 7610, preferably correspond with a particle number within the range of from 20 to 100.

Advantageously these said powders could be abrasive powders, such as carborundum, silicon carbide, and suchlike.

The method, according to the invention, for fastening the flange 10 to the tube 1, comprises the following operations.

First and foremost, the annular body or ring 16, is inserted over the tube 1, and made to slide axially, subsequent to which the metal-straps 5 and 6 are raised from the central tubular body 3 and spaced apart from it, in such a way as to form an annular space in-between the inner layer 5 of metal-straps and the central tubular body 3. Upon the outer surface of the cylindrical portion 11 of the flange and upon the outer surface of the layer 6, there is disposed an abrasive powder (for example, carborundum), having a greater hardness, with respect to the hardness of the cylindrical body, the annular body and the metal-straps.

Preferably, said powder is mixed with a viscous substance, such as grease, or resin, which is subsequently spread over the surfaces concerned, in such a way as to allow it to be distributed uniformly, with preventing it from slipping off. As an alternative, the surfaces can first be spread with a viscous substance and the powder then deposited over them.

The cylindrical portion is then inserted below the metal-straps until the flange abuts against the central tubular body 3. Thereupon, the ring 16 is taken back, in the direction of the tube extremity until it abuts against the slab 12 of the flange.

Thereupon, the flange is pressed radially by known means, for example, a press, in such a way as to squeeze down the ring 16 over the two layers of metal-straps. During said squeezing down action, the particles of the powders 18 and 19 having a higher hardness than that of the ring 16, of the cylindrical portion 11, and of the metal-straps 5 and 6, exercize a compressing action upon these component parts and penetrate not them just as if they were microscopic blocks, with rendering them to be made fast with one another, with the metal-straps, the annular body 16 and the cylindrical body 11.

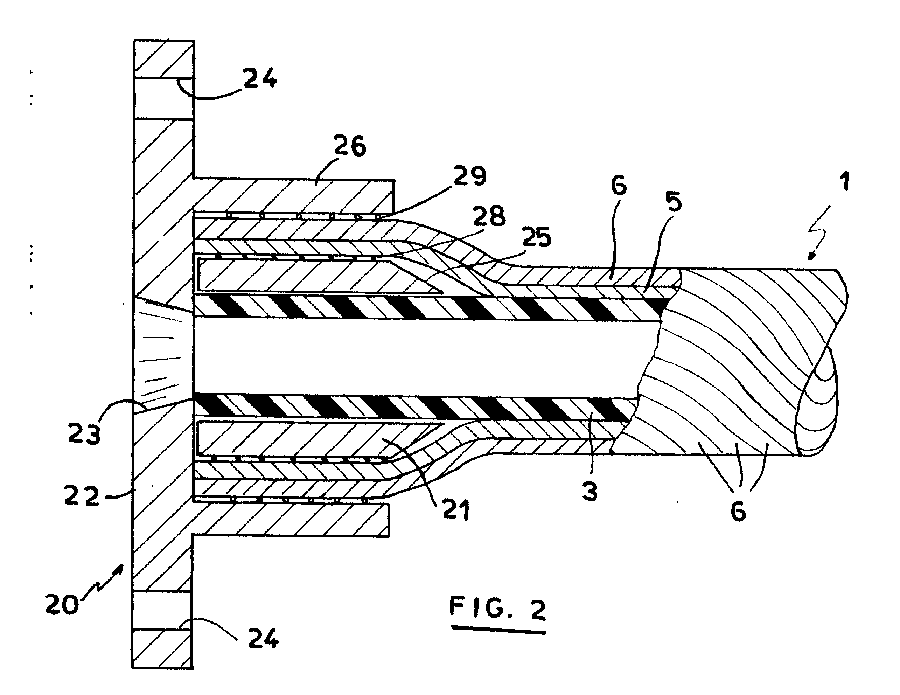

In the cross-secion of the termination shown in FIG. 2, the tube 1 is analogous to the tube shown in FIG 1 and hence, the same references numbers have been used in both the said figures.

The termination is realized with a flange 20 that comprises a frontal slab 22, provided with a central hole 23 and with peripherical holes 24, for the fastening of the slab.

In the said flange, the outermost annular body 26 is made fast with the frontal slab 22; whereas the inner cylindrical portion 21, provided with a tapered extremity 25, is ring-shaped. The layers 28 and 29 of powders, are interposed between the said ring 21 and the metal-straps 5, and between the metal-straps 6 and the annular body 26, respectively. Eventually, powders can be even be present in-between the metal-straps.

The method for realizing the termination, is substantially identical to the one already described with reference to the termination in FIG 1, the only difference arising from the fact that the cylindrical portion 21 that now has a ring-shape, is inserted over the tubular body 3 only subsequently to the layer of metal-straps being raised.

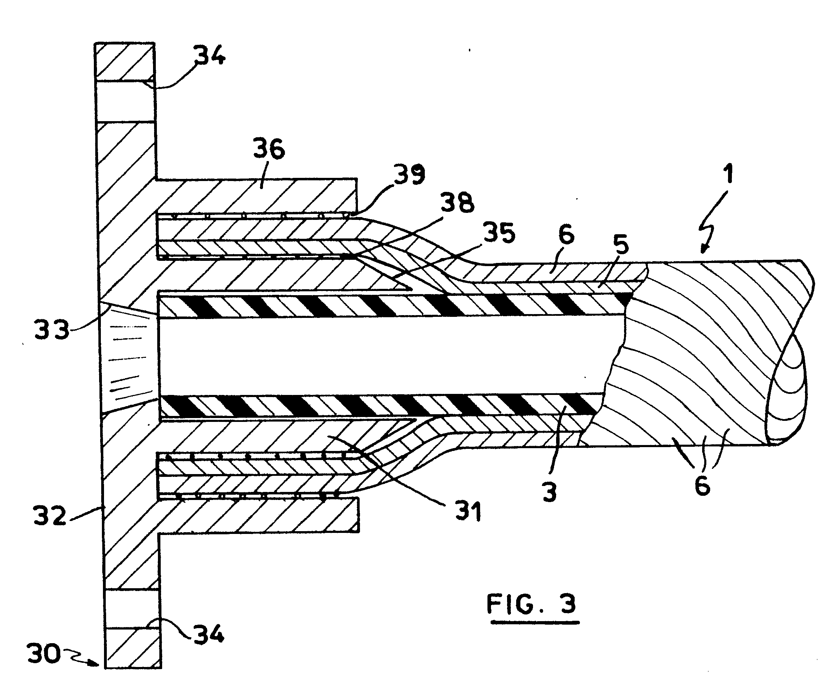

In FIG. 3 is shown a further embodiment for a termination applied to a tube 1, analogous to the previous tube, where the annular body 36 and the cylindrical portion 31 of the flange 30 can be joined together and made fast prior to their being compressed; or else, in substitution of the said compression itself, for example, through screwing means (not shown for simplicy sake). The layers of powders 38 and 39 are interposed between the surfaces of the metal-straps and the surfaces of the annular body 36, and also of the cylindrical portion 31 which, even here, is provided with a tapering 35. Eventually the powders can even be interposed between the two layers of metal-straps.

The frontal slab 32 comprising the central hole 33, and the peripherical holes 34, is analogous to the frontal slab of the previous examples.

## Claims

1. Termination on a tube (1) apt for transporting pressurized fluids and comprising a central tubular body (3) of an elastomeric, or plastomeric material, and at least two layers of metal-straps (5, 6) that are wound helically around said central tubular body, said termination, comprising a flange (10, 20, 30) having a cylindrical portion (11, 21, 31) and an annular body (16, 26, 36), characterized by the fact that the terminal tract of the said metal-straps (5, 6) without said central tubular body is clamped in-between the cylindrical portion (11, 21, 31) and the annular body (16, 26, 36) of the flange (10, 20, 30), with the interposition of layers of powders (18, 19, 28, 29, 38, 39), in-between the contacting surfaces of said metal-straps and of said flange parts the powders being harder than said metal-straps and said flange parts.

2. Termination, according to CLAIM 1, characterized by the fact that said powders (18, 19, 28, 29, 38, 39) are abrasive powders having a hardness in Vickers degrees of at least 100 points greater than the hardness of the materials which form the metal-straps (5, 6), the cylindrical portion (11, 21, 31) and the annular body (16, 26, 36).

3. Termination, according to CLAIM 1 or 2, characterized by the fact that the said flange (10) comprises a frontal slab (12) made fast with the cylindrical portion (11) while the annular body (16) is ring-shaped.

4. Termination, according to CLAIM 1 or 2, characterized by the fact that said flange (20) comprises a frontal slab (22) made fast with the annular body (26), while the annular cylindrical portion (21) is ring-shaped.

5. Termination, according to CLAIM 1 or 2, characterized by the fact that said flange (30) comprises a frontal slab (32) and that the annular body (36) and the cylindrical portion (31) can be made fast with one another and with the said frontal slab.

6. Method of fastening a flange (10, 20, 30), comprising cylindrical portion (11, 21, 31) and an annular body (16, 26, 36), to the extremity of a tube (1), comprising a central tubular body (3) of an elastomeric, or a plastomeric material, and at least two layers of metal-straps (5, 6) wound helically around the central tubular body, said method being characterized by the step of radially spacing-apart these metal-straps (5, 6) from the central tubular body (3), for a tract in correspondence to the respective flange parts and of engaging the spaced-apart tract of metal-straps (5, 6), by clamping it between the cylindrical portion (11, 21, 31) and the annular body (16, 26, 36) of the flange (10, 20, 30), with the interposition of layers of powders (18, 19, 28, 29, 38, 39), in-between the contacting surfaces of the metal-straps and of the flange parts, the powders being harder than said metal-straps and said flange parts.

7. Method, according to CLAIM 4, characterized by the fact of depositing the said layer of powders (18, 19, 28, 29, 38, 39) incorporated with a viscous substance that is apt for keeping the powders adherent to the surface.

## Revendications

1. Embout destiné à un tube (1) apte à transporter des fluides sous pression et comprenant un corps tubulaire central en matière élastomère, ou plastomère, et au moins deux couches de bandes métalliques (5, 6) qui sont enroulées en hélice autour dudit corps tubulaire central, ledit embout, comprenant une bride (10, 20, 30) comportant une partie cylindrique (11, 21, 31) et un corps annulaire (16, 26, 36), caractérisé par le fait que la partie terminale desdites bandes métalliques (5, 6) sans ledit corps tubulaire central est serré entre la partie cylindrique (11, 21, 31) et le corps annulaire (16, 26, 36) de la bride (10, 20, 30) avec une interposition de couches de poudre (18, 19, 28, 29, 38, 39), entre les surfaces de contact desdites bandes métalliques et desdites parties de bride, les poudres étant plus dures que lesdites bandes métalliques et lesdites parties de bride.

2. Embout selon la revendication 1, caractérisé par le fait que lesdites poudres (18, 19, 28, 29, 38, 39) sont des poudres abrasives dont la dureté en degré Vickers est d'au moins 100 points supérieure à la dureté des matières qui forment les bandes métalliques (5, 6), la partie cylindrique (11, 21, 31) et le corps annulaire (16, 26, 36).

3. Embout selon la revendication 1 ou 2, caractérisé par le fait que ladite bride (10) comprend une plaque frontale (12) d'un seul tenant avec la partie cylindrique (11), alors que le corps tubulaire (16) est de forme annulaire.

4. Embout selon la revendication 1 ou 2, caractérisé par le fait que ladite bride (20) comprend une plaque frontale (22) d'un seul tenant avec le corps annulaire (26), alors que la partie cylindrique annulaire (21) est de forme annulaire.

5. Embout selon la revendication 1 ou 2, caractérisé par le fait que ladite bride (30) comprend une plaque frontale (32) et que le corps annulaire (36) et la partie cylindrique (31) peuvent être réalisés d'un seul tenant l'une avec l'autre et avec ladite plaque frontale.

6. Procédé de fixation d'une bride (10, 20, 30), comprenant une partie cylindrique (11, 21, 31) et un corps annulaire (16, 26, 36) à l'extrémité d'un tube (1), comprenant un corps tubulaire central (3) en matière élastomère ou plastomère, et au moins deux couches de bandes métalliques (5, 6) enroulées en hélice autour du corps tubulaire central, ledit procédé étant caractérisé par l'étape consistant à espacer radialement ces bandes métalliques (5, 6) du corps tubulaire central (3), pour former une partie en correspondance avec les parties respectives de bride, et à amener en contact le faisceau espacé de brides métalliques (5, 6) en le serrant entre la partie cylindrique (11, 21, 31) et le corps annulaire (16, 26, 36) de la bride (10, 20, 30) avec interposition de couches de poudre (18, 19, 28, 29, 38, 39), entre les surfaces en contact des bandes métalliques et des parties de bride, les poudres étant plus dures que lesdites bandes métalliques et lesdites parties de bride.

7. Procédé selon la revendication 4, caractérisé par le fait de déposer ladite couche de poudre (18, 19, 28, 29, 38, 39) incorporée avec une substance visqueuse qui est apte à maintenir les poudres en adhérence avec la surface.

## Ansprüche

1. Rohrende für ein Rohr (1) zum Transportieren von Druckfluiden und umfassend einen mittleren schlauchförmigen Körper (3) aus elastomerem oder plastomerem Material, und wenigstens zwei Lagen aus Metallbändern (5,6), die schraubenlinienförmig um den mittleren schlauchförmigen Körper gewickelt sind, wobei das Rohrende einen Flansch (10,20,30) aufweist, der einen zylindrischen Teil (11,21,31) und einen ringförmigen Körper (16,26,36) hat, **dadurch gekennzeichnet,** daß der Endbereich der Metallbänder (5,6) ohne den mittleren schlauchförmigen Körper zwischen dem zylindrischen Teil (11,21,31) und dem ringförmigen Körper (16,26,36) des Flansches (10,20,30) eingeklemmt ist unter Zwischenanordnung von Pulverschichten (18,19,28,29,38,39) zwischen den Berührungsflächen der Metallbänder und der Flanschteile, wobei die Pulver härter als die Metallbünder und die Flanschteile sind.

2. Rohrende nach Anspruch 1, dadurch gekennzeichnet, daß die Pulver (18,19,28,29,38,39) Schleifpulver sind mit einer Härte in Vickers-Grad um wenigstens 100 Punkten größer als die Härte der Materialien, welche die Metallbänder (5,6) den zylindrischen Teil (11,21,31) und den ringförmigen Körper (16,26,36) bilden.

3. Rohrende nach Anspruch 1 oder 2, dadurch gekennzeichnet, daß der Flansch (10) eine Frontplatte (12) aufweist, die mit dem zylindrischen Teil (11) fest verbunden ist, während der ringförmige Körper (16) die Gestalt eines Ringes hat.

4. Rohrende nach Anspruch 1 oder 2, dadurch gekennzeichnet, daß der Flansch (20) eine Frontplatte (22) hat, die mit dem ringförmigen Körper (26) fest verbunden ist, während der ringförmige zylindrische Teil (21) die Gestalt eines Ringes hat.

5. Rohrende nach Anspruch 1 oder 2, dadurch gekennzeichnet, daß der Flansch (30) eine Frontplatte (32) hat, und daß der ringförmige Körper (36) und der zylindrische Teil (31) miteinander und mit der Frontplatte fest verbindbar sind.

6. Verfahren zum Befestigen eines Flansches (10,20,30), der einen zylindrischen Teil (11,21,31) und einen ringförmigen Körper (16,26,36) hat, an dem Ende eines Rohres (1), das einen mittleren schlauchförmigen Körper (3) aus elastomerem oder plastomerem Material und wenigstens zwei Lagen aus Metallbändern (5,6) aufweist, die schraubenlinienförmig um den mittleren schlauchförmigen Körper gewickelt ist,
**dadurch gekennzeichnet,**
daß die Metallbänder (5,6) über eine Länge im Bereich der betreffenden Flanschteile in einen radialen Abstand von dem mittleren schlauchförmigen Körper (3) gebracht und die beabstandete Länge der Metallbänder (5,6) erfaßt werden durch Festklemmen von ihnen zwischen dem zylindrischen Teil (11,21,31) und dem ringförmigen Körper (16,26,36) des Flansches (10,20,30) unter Zwischenanordnung von Pulverschichten (18,19,28,29,38,39) zwischen den Berührungsflächen der Metallbänder und der Flanschteile, wobei die Pulver härter als die Metallbänder und die Flanschteile sind.

7. Verfahren nach Anspruch 6, dadurch gekennzeichnet, daß die Pulverschichten (18,19,28,29,38,39) angeordnet werden gemischte mit einer viskosen Substanz, welche in der Lage ist, die Pulver an der Fläche anhaftend halten kann.

FIG. 1

EP 0 239 000 B1

**FIG. 2**

FIG. 3